# EUROPEAN PATENT APPLICATION

(11) **EP 4 789 960 A1**
(43) Date of publication of application: **12.08.2026**
(21) Application number: 25191051.9
(22) Date of filing: 22.07.2025
(51) Int. Cl.: B62K 25/28, B62K 3/04, B62M 9/12, B62M 9/16

(54) **MODIFIED REAR SUSPENSION BICYCLE TO ENABLE ALTERNATIVE PIVOT POINT LOCATION IN ORDER TO PROVIDE ADDITIONAL ANTI-RISE VALUES**

(30) Priority: 05.02.2025 US 202519045948
(71) Applicant: Priority Outdoor Products, LLC, New York, NY 10013 (US)
(72) Inventor: Lemasson, Fabien Gaston, 53140 Lignières-Orgères (FR); Schwartz, Michael, Douglaston, NY 11353 (US)
(74) Representative: Rossmanith, Manfred

(57) **Abstract**

A rear suspension bicycle having a fixed rear suspension high pivot point (410) located within an open area (650) of a typical front triangle (110) to provide unique anti-rise values not available when the rear suspension pivot point is located on a frame member of the front triangle (110). The front triangle (110) may include one or more additional support members (e.g., frame member, tube, bracket) to provide mounting points for the fixed rear suspension high pivot point (410) within the front triangle (110). The one or more additional support members (720, 820, 920, 1020, 1120) may connect to at least some subset of a seat tube (112), a top tube (114), a down tube (116), a bottom bracket (710), and a head tube (118) thereof. The one or more additional support members (1420, 1430, 1520, 153) may replace one or more tubes of traditional front triangle (110). One or more tubes (1220, 1320) of the front triangle (110) may be modified so as to extend within the open area (650) of the typical front triangle (110).

## Description

### BACKGROUND

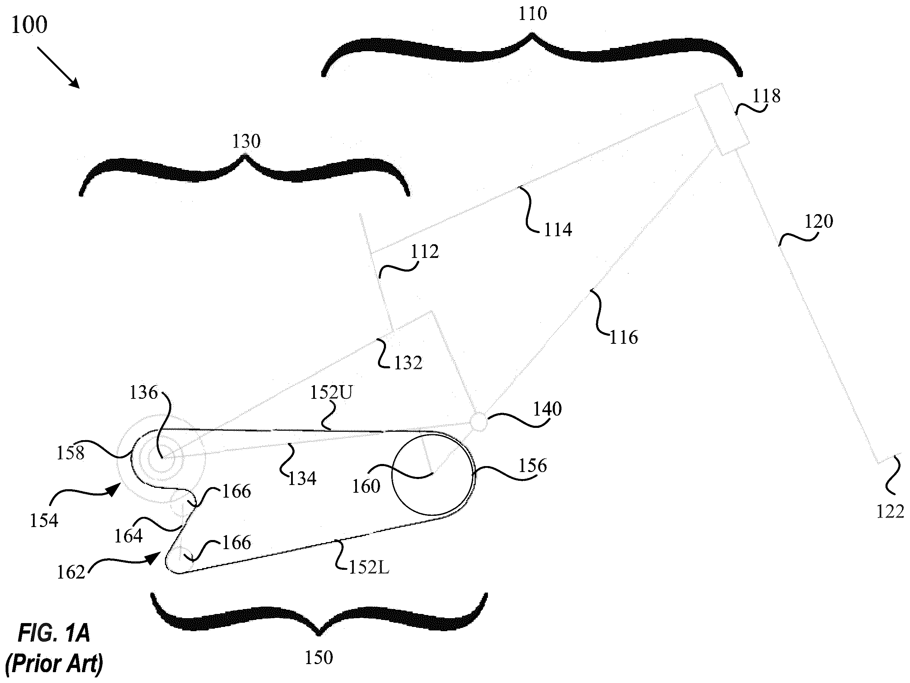

**FIGs. 1A-B** illustrate line diagrams of example chain driven rear suspension bicycles **100, 170.** The bicycles **100, 170** include a frame made up of a front triangle **110** and a swingarm (rear triangle) **130.** The front triangle **110** includes a seat tube **112,** a top tube **114** and a down tube **116.** The top tube **114** and the down tube **116** are connected to a head tube **118** that connects to handlebars (not illustrated) and a front fork **120** that is used to secure a front wheel (not illustrated) at a front wheel axle (axis) **122.** The seat tube **112** and the down tube **116** are connected to each other via a bottom bracket shell (not separately illustrated, just shown as point of intersection between seat tube **112** and the down tube **116** for ease of illustration). The swingarm **130** may include a seatstay **132** and a chainstay **134,** or a combined chain and seatstay **134** alone in case of a mono-arm swingarm. The seatstay **132** and the chainstay **134** meet to secure a rear wheel (not illustrated) at a rear wheel axle (axis) **136.** For a mono-arm swingarm, simply the combined chain and seatstay **134** would secure the rear wheel.

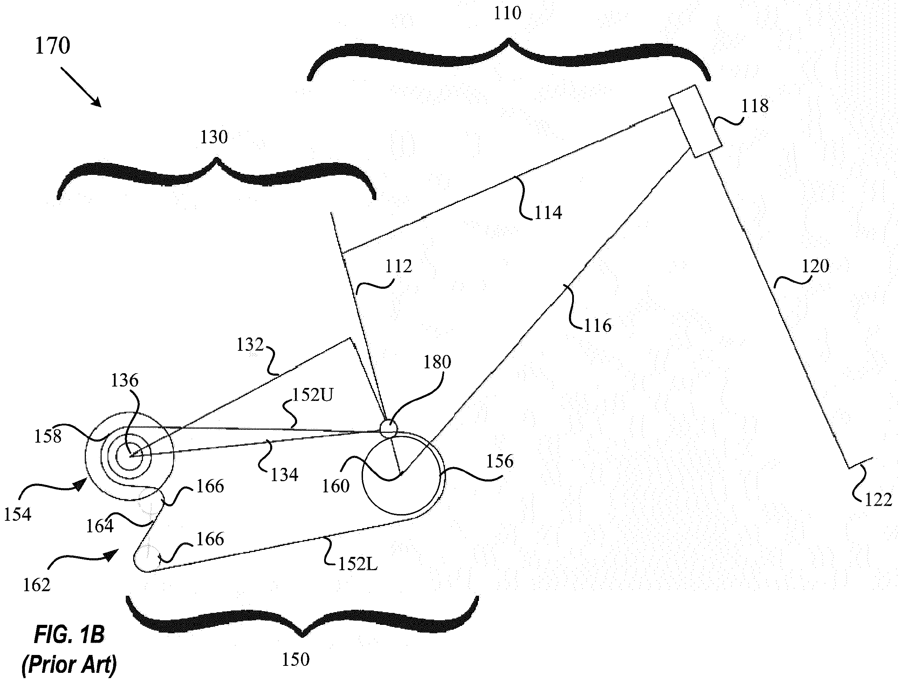

The swingarm **130** may be connected to the front triangle **100** via a shock absorber or other linkages that are not illustrated for simplicity. The bicycle **100** also includes a rear suspension axis (main pivot point) where the swingarm **130** pivots with respect to the front triangle **110.** The rear suspension axis may be a physical point or may be a floating or virtual pivot point (which may or may not coincide with a physical point on the bicycle frame). The floating or virtual pivot point for the rear suspension axis is found at an instant center that varies depending on the rear suspension design and kinematics. A floating pivot is not illustrated for ease of illustration and simplicity of explaining the basic components. A fixed-point rear suspension axis is physically located on the front triangle **110** (e.g., seat tube **112** or down tube **116).** The bicycle **100** includes a rear suspension axis **140** located on the down tube **116** as illustrated in **FIG. 1A****.** The bicycle **170** includes a rear suspension axis **180** located on the seat tube **112** as illustrated in **FIG. 1B****.**

The bicycles **100, 170** also includes a drive train **150** for providing movement thereof. The drivetrain **150** consists of a drive chain (herein referred to as the "chain") **152,** a rear cassette **154** and a front chain ring **156.** The rear cassette **154** is located on the rear wheel centered around the rear wheel axle **136.** The rear cassette **154** includes a plurality of different sized cogs **158** (to achieve different gear ratios) for receiving and routing the chain **152.** The front chain ring **156** is attached to a crank set (not illustrated) and rotates about a crank axis **160** on a bottom bracket (not illustrated). The crank axis **160** is simply shown as a point of intersection between seat tube **112** and the down tube **116** for ease of illustration. The chain **152** routes around the appropriate cog **158** of the rear cassette **154** and the front chainring **156.** An upper portion of the chain **152U** moves forward from the rear cassette **154** to the front chainring **156** and a lower portion of the chain **152L** moves rearward from the front chainring **156** to the rear cassette **154.** The bottom bracket enables the crank set and pedals (not illustrated) to be connected thereto. The crank set and pedals enable a user to pedal the bicycle **100** in order to engage the drive train **150** and move the bicycle **100.** The pedaling causes the rotation of the front chain ring **156** which will in turn rotate the chain **152** and the appropriate cog **158** of the rear cassette **154** and the rotation of the cog **158** causes rotation of the rear wheel. If the bicycle **100** is an electric bicycle, it will include an electric motor (not illustrated) to provide, or assist with, the movement of the bicycle **100.**

The amount of the chain **152** required to route around a larger cog **158** of the rear cassette **154** and the front chainring **156** is more than is required to route the chain **152** around a smaller cog **158.** The extra chain **152** required is known as virtual chain growth. To account for the chain growth, a derailleur **162** is utilized to take up the slack therein based on the cog **158** that the chain **152** is routed around. The derailleur **162** is a rotating member **164** onto which two idler pulleys **166** are mounted. The derailleur **162** is secured to the swingarm **130** in close proximity to the rear cassette **154** and is spring loaded to rotate the rotating member **164** and the idler pulleys **166** based on the rear cog size **158.** This allows for virtual chain growth that results from shifting the chain to different sized cogs **158** on the rear cassette **154.**

In addition to the cog **158** utilized affecting chain growth, a vertical distance that the rear wheel axis **136** travels with respect to its resting position (known as vertical rear wheel travel) may result in chain growth. That is, as the rear wheel axis **136** moves upward along a path defined by the rear suspension axis **140,** if the distance between the rear wheel axis **136** and the crank axis **160** increases, it will result in chain growth. As with most mechanical vehicle suspension systems, a bicycle **100** with rear suspension will be designed such that the swingarm **130,** as it moves throughout its range of vertical rear wheel travel, will act upon a shock absorber resulting in a displacement of a spring.

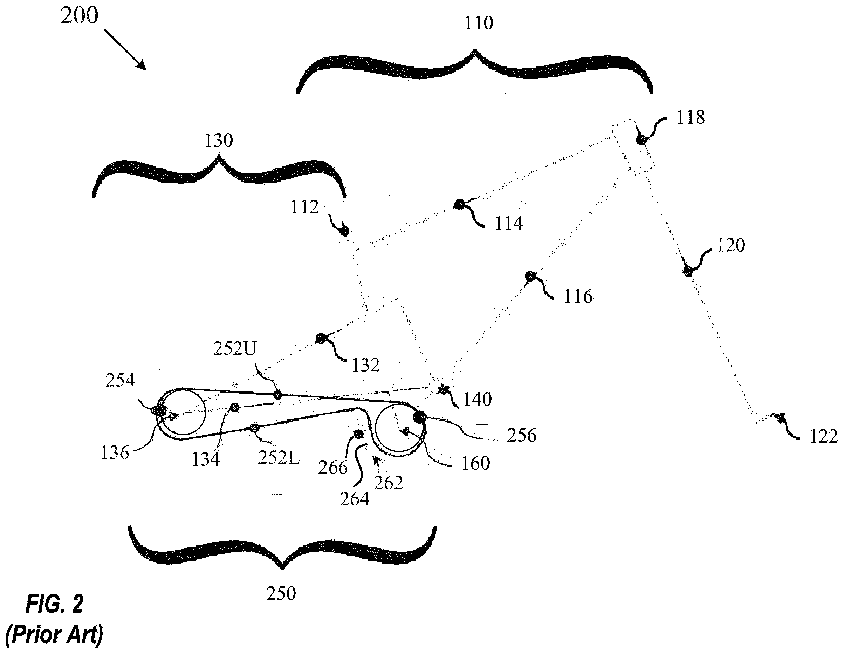

**FIG. 2** illustrates a line diagram of an example belt driven rear suspension bicycle **200.** As the bicycle **200** has many of the same components as the bicycle **100,** the same reference numbers are used to identify them and they are not described below to avoid redundancy. The bicycle **200** includes a drive train **250** that consists of a drive belt (herein referred to as the "belt") **252,** a rear sprocket **254** and a front sprocket **256.** The sprockets **254, 256** simply route the belt **252** and do not provide different gear ratios (provides single external gear ratio). Accordingly, the bicycle **200** may provide a gear box (not illustrated) located at the intersection between seat tube **112** and the down tube **116** (e.g., the crank axis **160)** or a geared hub (not illustrated) located at the rear wheel axle **136** to provide internal gear ratios. If used, the gear box is secured to the seat tube **112** and the down tube **116** via a gear box mounting bracket. The rear sprocket **254** is located on the rear wheel centered around the rear wheel axle **136.** The front sprocket **256** is located on the gear box or the bottom bracket shell. The drive belt **252** routes around the rear sprocket **254** and the front sprocket **256** with the upper portion **252U** moving forward from the rear sprocket **254** to the front sprocket **256** and a lower portion **252L** moving rearward from the front sprocket **256** to the rear sprocket **254.** If the gear box is used a crank set and pedals (not illustrated) are connected thereto to create the crank axis **160.** If the geared hub is used the crank set and pedals are connected to the bottom bracket shell as discussed above with respect to **FIG. 1****.** In either case, the crank axis **160** enables a user to pedal the bicycle **200.** Pedaling causes the rotation of the front sprocket **256** which will in turn rotate the drive belt **252** which in turn will rotate the rear sprocket **254** and the rear wheel.

It should be noted that the bicycle **200** having only a single external gear ratio, is not limited to being a belt driven bicycle. Rather, the bicycle could be a chain driven bicycle and utilize a chain and front and rear chain rings instead of the drive belt **252,** the front sprocket **256** and the rear sprocket **254.** If the bicycle **200** is an electric bicycle, it will include an electric motor (not illustrated) to provide, or assist with, the movement of the bicycle **200.**

As the bicycle **200** is a single external gear ratio there is no chain growth (typically called chain growth even when a drive belt **252** is utilized) to account for due to different sized cogs so there is no need for a derailleur to adjust the tension of the drive belt **252.** However, as with the bicycle **100,** vertical rear wheel travel may result in chain growth. Accordingly, the bicycle **200** includes a tensioner **262** to account for the chain growth resulting from vertical rear wheel travel. The tensioner **262** is a rotating member **264** onto which an idler pulley **266** is mounted. The tensioner **262** may be secured to the front triangle **110** and be located behind the front sprocket **256** (contacts the drive belt **252** behind the front sprocket **256).** The tensioner **262** is spring loaded to rotate the rotating member **264** and the idler pulley **266** to adjust the path of the drive belt **252** based on the vertical rear wheel travel.

For the bicycle **200** illustrated, the rear suspension axis **140** is located on the down tube **116.** A rear suspension axis could be located on the seat tube **112** in a similar manner to the rear suspension axis **180** that was illustrated in **FIG. 1B****.**

The rear suspension of rear suspension bicycles (e.g., **100, 170, 200)** tends to compress (squat) due to rearwards transfer of mass under acceleration (e.g., caused by pedaling) and extend (rise) due to forwards transfer of mass under deceleration (e.g., caused by front and/or rear wheel braking). It is desirable for the rear suspension bicycles to resist the compression (squatting) and extension (rising) of the rear suspension. Anti-squat is a built-in mechanical way to combat rear suspension compression (squatting) and anti-rise is a built-in mechanical way to combat rear suspension extension (rising).

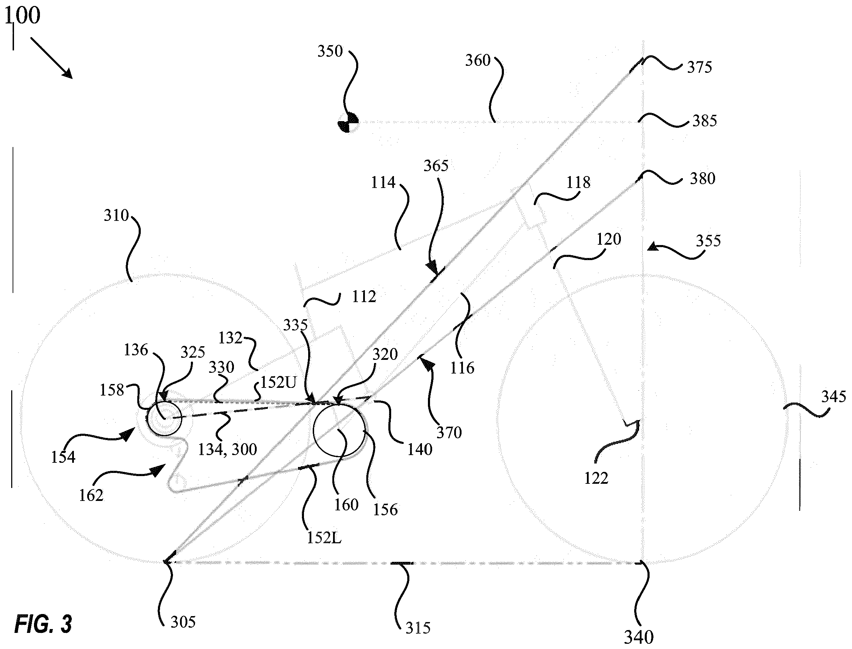

**FIG. 3** illustrates a graphic calculation of anti-rise and anti-squat values on an example bicycle (the bicycle is illustrated in similar fashion to the bicycle **100** but the calculations are not limited thereto). For a set suspension design, the anti-squat and anti-rise calculations depend on the position of the center of gravity **350** of the rider and bicycle at any given time, the front and rear suspension positions at any given time, the wheel size of the front and rear wheels **310, 345,** and the drivetrain cog sizes **156, 158** in use for externally geared bicycles **100, 170** (or the sprocket sizes **254, 256** for internally geared bicycles **200** with a single external gear ratio). In calculating the anti-rise and anti-squat values, the following should be considered: (1) a line **300** between the rear suspension axis **140** and the rear wheel axis **136** (shown as dotted line which as illustrated overlaps the chainstay **134);** (2) contact point **305** between the rear wheel **310** and ground **315;** (3) a tangent point **320** between the drive line **152U** and the front chainring **156;** (4) a tangent point **325** between the drive line **152U** and the appropriate cog **158** of the rear cassette **154;** (5) line **330** between tangent points **320, 325** (shown as dotted line which as illustrated substantially overlaps the drive line **152U);** (6) intersection **335** between lines **300, 330;** (7) contact point **340** between the front wheel **345** and the ground **315;** (8) line **355** extending upward from the contact point **340** and passing through the front wheel axis **222** (9) line **360** extending from the center of gravity **350** parallel to the ground **315,** (10) anti-squat line **365** traversing the contact point **305** and the intersection **335;** and (11) anti-rise line **370** traversing the contact point **305** and the suspension axis **140.**

The anti-squat height **375** as measured from the ground **315** is the intersection of the anti-squat line **365** and the line **355.** The anti-rise height **380** as measured from the ground **315** is the intersection of the anti-rise line **370** and the line **355.** The center of gravity height **385** as measured from the ground **315** is the intersection of the line **360** and the line **355.**

The graphical way of measuring the anti-squat takes into consideration the rear suspension instant center of rotation (the rear suspension axis **140** or **180)** and the direction of the external force applied by the driveline to the rear suspension. The driveline force creates a torque that will usually serve to reduce the amount the rear suspension squats when pedaling. The anti-squat value can be in line with the driveline's member under tension and is based on the anti-squat height **375** compared to the center of gravity height **385 (375/385** * 100%).

As illustrated, the anti-squat height **375** is higher than the center of gravity height **385** so that the anti-squat value is greater than 100%. An anti-squat value greater than 100% results in the rear suspension extending (experiencing negative squat) under pedaling. This is a desirable trait of a suspension design since if the rearward transfer of mass from pedaling were to cause the shock absorber to compress, energy from pedaling would be expended for this (e.g., for purposes other than propelling the bike forward). In addition, the bicycle's frame pitch remains constant so the geometry of the bicycle remains static. An anti-squat value equal to 100% (anti-squat height **375** and the center of gravity height **385** are same) results in the rear suspension remaining stable (experiencing no squat) under pedaling. This is also a desirable result for the same aforementioned reasons.

An anti-squat value less than 100% (anti-squat height **375** less than the center of gravity height **385)** results in the rear suspension compressing due to the rearward mass transfer from acceleration (experiencing squat) under pedaling. Depending on the degree to which this anti-squat value is less than 100%, this can be undesirable. An anti-squat value equal to 0% (anti-squat height **375** and the contact point **340** are same) results in the rear suspension compressing at the same rate as the rearward mass transfer from acceleration (no anti-squat properties) under pedaling. This is an undesirable result because it would result in a too great change in frame pitch angle consequently overloading the rear wheel and discharging the front wheel, affecting traction, and also putting the rider in an unstable position. This combined to the cyclic nature of the pedaling movement induces what is referred to as suspension bob, which is highly undesirable.

The graphical way of measuring the anti-rise only takes into consideration the rear suspension instant center of rotation **(140** or **180).** The rear wheel braking force at the ground contact patch creates a torque impulse that will usually serve to reduce the amount the rear suspension rises when braking. The anti-rise could be seen as a "frame pitch correcting factor" that is most useful when riding down steep slopes in order to reduce the risk of the rider going over the handlebars, as the torque impulse caused by braking forces serves to compress the suspension i.e. induce squat. The braking force to slow down the bicycle and rider is largely achieved through the front brake. The anti-rise value is based on the anti-rise height **380** compared to the center of gravity height **385 (380/385** * 100%).

As illustrated, the anti-rise height **380** is lower than the center of gravity height **385** so the anti-rise value is less than 100%. An anti-rise value less than 100% results in the rear suspension extending at a lesser rate (experiencing reduced rise). Depending on the degree to which this anti-rise value is less than 100%, this can be undesirable. An anti-rise value greater than 100% (anti-rise height **380** greater than the center of gravity height **385)** results in the rear suspension compressing (negative rise) under rear wheel braking. This is a desirable trait of a suspension design since if the front suspension were to compress too greatly under deceleration, it could destabilize the rider. Counteracting the front suspension dive by a controlled amount of rear suspension compression allows a rider to more easily control the bicycle. An anti-rise value equal to 100% (anti-rise height **380** and the center of gravity height **385** are same) results in the rear suspension remaining stable (experiencing no rise) under rear wheel braking. This is also a desirable result for the same aforementioned reasons.

An anti-rise value equal to 0% (anti-rise height **380** and the contact point **340** are same) results in the rear suspension extending at the expected rate (no anti-rise properties) under rear wheel braking. This is an undesirable result because it would result in a too great change in frame pitch angle consequently overloading the front wheel and discharging the rear wheel, affecting traction, and also putting the rider in an unstable position, more prone to falling over the handlebars. An anti-rise value less than 0% (anti-rise height 380 below the contact point **340)** results in the rear suspension extending more than the expected rate (experiencing an increased rise) under rear wheel braking. This is also an undesirable result for the reasons noted above.

The location of the rear suspension axis **140 or 180** impacts the anti-squat and anti-rise parameters that may be achieved. The placement of a fixed-point rear suspension axis **140 or 180** on the front triangle **110** (e.g., seat tube **112,** down tube **116)** limits the anti-rise parameters that may be obtained. What is needed is a bicycle that can provide additional anti-rise parameters.

### BRIEF DESCRIPTION OF DRAWINGS

The features and advantages of the various embodiments will become apparent from the following detailed description in which:
**FIGs. 1A-B** illustrate line diagrams of example chain driven rear suspension bicycles.
**FIG. 2** illustrates a line diagram of an example belt driven rear suspension bicycle.
**FIG. 3** illustrates a graphic calculation of anti-rise and anti-squat values on the example bicycle.
**FIG. 4** illustrates a simple line diagram of an example high pivot rear suspension bicycle, according to one embodiment.
**FIG. 5** illustrates a simple line diagram of an example internally geared high pivot point rear suspension bicycle, according to one embodiment.
**FIG. 6** illustrates anti-rise values that would be obtained for different suspension pivot locations, according to one embodiment.
**FIGs. 7-11** illustrate simple line diagrams of example high pivot rear suspension bicycles having additional support members to enable the fixed pivot point to be located within the typical void area between the seat tube and the down tube, according to various embodiments.
**FIGs. 12-13** illustrate simple line diagrams of example high pivot rear suspension bicycles having modified frame members to enable the fixed pivot point to be located within the typical void area between the seat tube and the down tube, according to various embodiments.
**FIGs. 14-15** illustrate simple line diagrams of example high pivot rear suspension bicycles having a top tube at least partially replaced by additional support members to enable the fixed pivot point to be located within the typical void area normally located between the seat tube and the down tube, according to various embodiments.

### DETAILED DESCRIPTION

As illustrated in **FIGs. 1A-B** and **2,** the most common rear suspension designs have a rear suspension axis (pivot point) **140, 180** near the crank axis **160** and the front chainring **156** or front sprocket **256.** These rear suspension designs provide an axle path that rotates in a circular direction generally towards the front of the bicycle. This generally forward rotation is to the detriment of suspension performance, as the general force vector experienced by a rear wheel when it impacts a road obstacle is in a generally rearward direction. By moving the rear suspension pivot point higher (e.g., further above the crank axis **160** and the front chainring/sprocket **156, 256),** the axle path of a bicycle becomes more rearward, better matching the direction of the force vector imparted by a rear wheel impact. A high rear suspension pivot point bicycle is one where the rear suspension pivot point is located high enough that an idler pulley is required to route the chain or drive belt **152, 252** coming from the rear cassette **154** or rear sprocket **254** to the front chainring/sprocket **156, 256.** Bicycles having high rear suspension pivot points are becoming popular as they provide improved suspension control and a smoother ride in rough terrain.

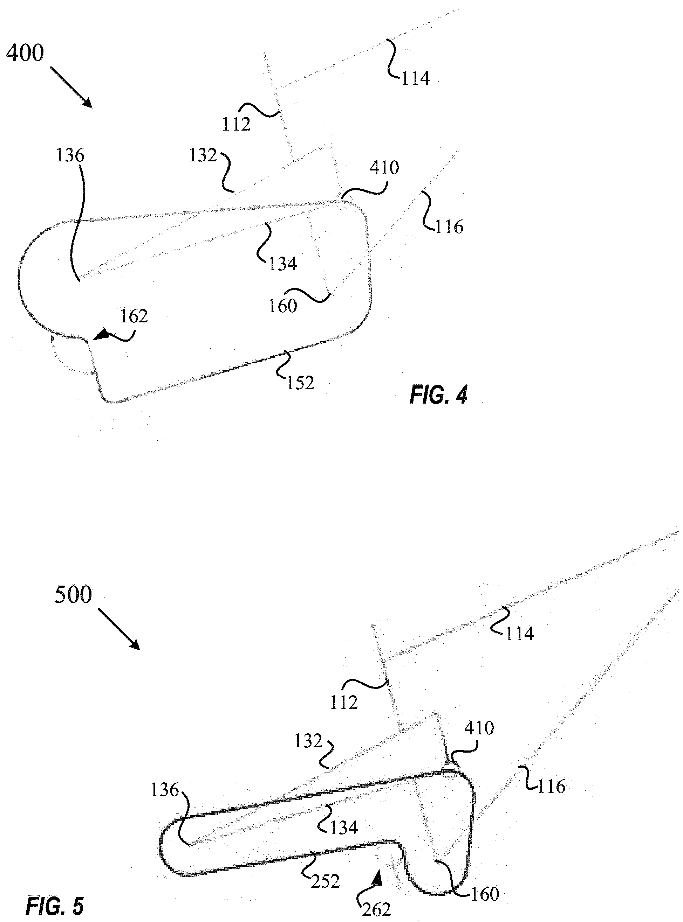

**FIG. 4** illustrates a simple line diagram of an example multi-geared (chain driven) high pivot rear suspension bicycle **400** (similar to the bicycle **100).** The bicycle **400** includes a rear suspension axis **410** (main pivot point) that is higher than the rear suspension axis **140, 180** of bicycle **100, 170** respectively. The axle path of the bicycle **300** is accordingly substantially rearward. An idler pulley (not illustrated) is located in close proximity to the high rear suspension axis **410.** The chain **152** is routed around a certain cog of the rear cassette (not illustrated or identified in simplified drawing) centered around the rear wheel axle **136,** the idler pulley located in close proximity to the high rear suspension axis **310,** the front chainring (not illustrated) centered around the crank axis **160** and the derailleur **162.** The actual components of the derailleur **162** are not illustrated for simplicity. Rather, they are simply illustrated as adjusting the path that the chain **152** travels.

**FIG. 5** illustrates a simple line diagrams of an example internally geared (e.g., belt driven) high pivot point rear suspension bicycle **500** (similar to the bicycle **200).** The bicycle **500** includes a rear suspension axis **410** (main pivot point) that is higher than the rear suspension axis **140** of bicycle **200** (or the rear suspension **180** that was not illustrated for the internally geared rear suspension bicycle). The axle path of the bicycle **500** is accordingly substantially rearward. An idler pulley (not illustrated) is located in close proximity to the high rear suspension axis **410.** The drive belt **252** is routed around the rear sprocket (not illustrated) centered around the rear wheel axle **136,** the idler pulley located in close proximity to the high rear suspension axis **410** and the front sprocket (not illustrated) centered around the crank axis **160.**

The use of high pivot point suspension bicycles **400, 500** makes the anti-squat value easily controlled by size and position of the idler. The anti-rise value is generally more difficult to control due to its direct relation to the suspension pivot location **410** and its physical need to be attached to a frame member of the front triangle **110** (e.g., seat tube **112,** down tube **116).** It's also often looked over, as the focus is often more on the anti-squat characteristics of the suspension design. But the high anti-rise values and the consequential high level of squat under rear wheel braking (often referred to as "brake jack") is a point that is recurrent in high pivot bicycle reviews.

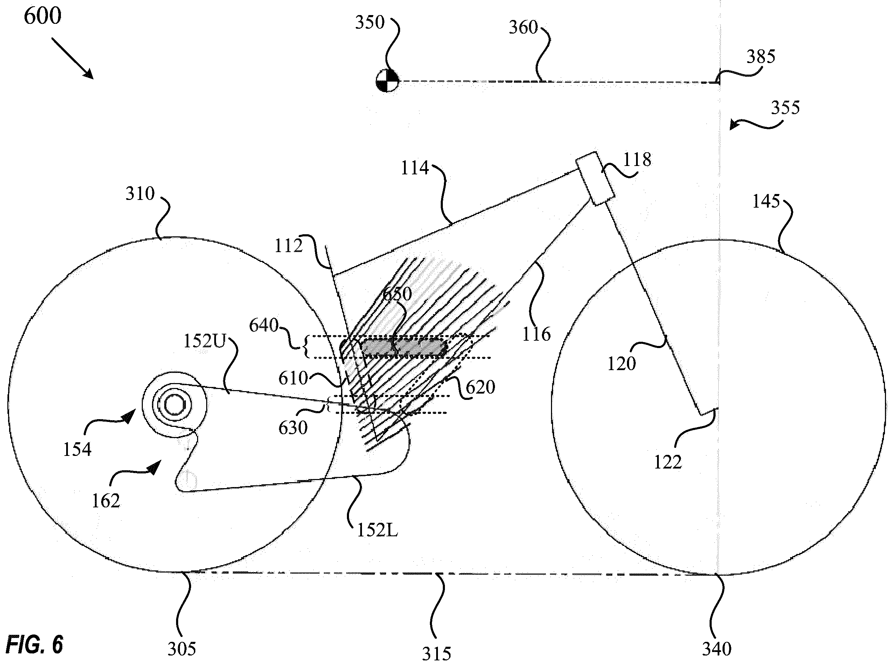

**FIG. 6** illustrates anti-rise values that would be obtained for different suspension pivot locations. The anti-rise values are illustrated on an example geared bicycle **600** (similar to bicycles **100, 170** of **FIGs. 1A-B** or **400** of **FIG. 4****)** having a rear cassette **154** and a derailleur **162.** However, the anti-rise values that would be obtained for different suspension pivot locations is not limited to the geared bicycle **600.** The anti-rise values could be obtained on an internally geared/belt-driven bicycle (similar to bicycle **200** of **FIG. 2** or **500** of **FIG. 5****)** without departing from the current scope. The rear suspension axis (pivot point) **140, 180, 410** is not illustrated. The chain **152** is illustrated as simply rotating around where the front chainring **156** (or front sprocket **256)** would be located (not illustrated or labeled for ease) indicating that the bicycle **600** is a standard pivot rear suspension bicycle (similar to bicycles **100, 170** of **FIGs. 1A-B** or **200** of **FIG. 2****).** However, the bicycle **600** is not limited thereto as it could be a high pivot rear suspension bicycle (similar to bicycle **400** of **FIG. 4** or **500** of **FIG. 5****)** without departing from the current scope.

A range of locations **610** on or near the seat tube **112** and a range of locations **620** on or near the down tube **116** where the rear suspension axis (pivot point) may be located are illustrated as dashed ovals surrounding the seat tube **112** and down tube **116** respectively. The approximate height ranges **630** where standard rear suspension pivot points (e.g., **140, 180)** are typically located on the seat tube **112** or the down tube **116** is illustrated as being between the two red horizontal lines. The approximate height ranges **640** where high pivot rear suspension pivot points (e.g., **410)** are typically located on the seat tube **112** or the down tube **116** is illustrated as being between the two blue horizontal lines.

The various colored lines extending upwards from the seat tube **112** to the down tube **116** are the anti-rise values associated with the bicycle **600.** As illustrated, the anti-rise values start at 70% for the lowest line (dark blue) and the value increases 5% for each line thereabove and topping out at 150% for the highest line (dark red). As the anti-rise values extend upward at an angle, a rear suspension pivot point at a certain height on the seat tube **112** will provide a greater anti-rise value than a rear suspension pivot point at the same height on the down tube **116.**

For example, the lower red line associated with standard rear suspension pivot points intersects with the seat tube **112** at the fifth (light blue) anti-rise line having a 90% value while it intersects the down tube **116** between the second and third anti-rise line so has an anti-rise value therebetween (approximately 77.5%). The upper red line intersects the seat tube **112** between the seventh and eight anti-rise line so has an anti-rise value therebetween (approximately 102.5%) while it intersects the down tube **116** at the third anti-rise line having an 80% value. The lower blue line associated with high pivot rear suspension pivot points intersects the seat tube **112** at the thirteenth anti-rise line (yellow) having a 130% value while it intersects the down tube **116** between the fourth and fifth anti-rise line so has an anti-rise value therebetween (approximately 87.5%). The upper blue line intersects the seat tube **112** at the seventeenth anti-rise line having a 150% value while it intersects the down tube **116** at the fifth anti-rise line having a 90% value.

As can be seen, the anti-rise values for standard pivot rear suspension bicycles are fairly close between the seat tube **112** and the down tube **116.** However, the anti-rise values between the seat tube **112** and the down tube **116** are substantially different for the high pivot rear suspension bicycles.

Returning to the "brake jack" phenomenon, the only way to reduce it to more acceptable levels is to move the suspension pivot point forward (e.g., from seat tube **112** to down tube **116).** For traditional suspension platforms, the suspension point cannot really be moved forward that much as the seat tube **112** and the down tube **116** are in close proximity to each other at that point. Such a movement would affect the anti-rise value but not to a great extent as discussed above. For high pivot suspension platforms, the suspension point can be moved forward a large amount. However, moving the high pivot point from the seat tube **112** to the down tube **116** will substantially reduce the anti-rise values as noted above. Keeping the suspension point on the seat tube **112** results in a common complaint that the rear suspension is compressing too much (is "packing up") under braking, rendering the bike less maneuverable and reducing its ability to soak up bumps as a considerable amount of its suspension travel has already been used up.

For high pivot suspension platforms, an area **650** between the seat tube **112** and the down tube **116** at the approximate height ranges **640** could provide a further forward suspension point that would reduce the "brake jack" phenomenon as well as the "packing up" phenomenon and still provide a sufficient anti-rise value. A desirable anti-squat value is usually near or above 100% and probably should not surpass 120%. A desirable anti-rise value is usually near or above 100 and probably should not surpass 130%.

A bicycle that provides a manner to provide a fixed high pivot point rear suspension within the area **650** would enable the various desirable parameters to be obtained. What is needed is some type of support member (e.g., frame member, tube, bracket) within the void of the front triangle **110** to provide this fixed suspension point.

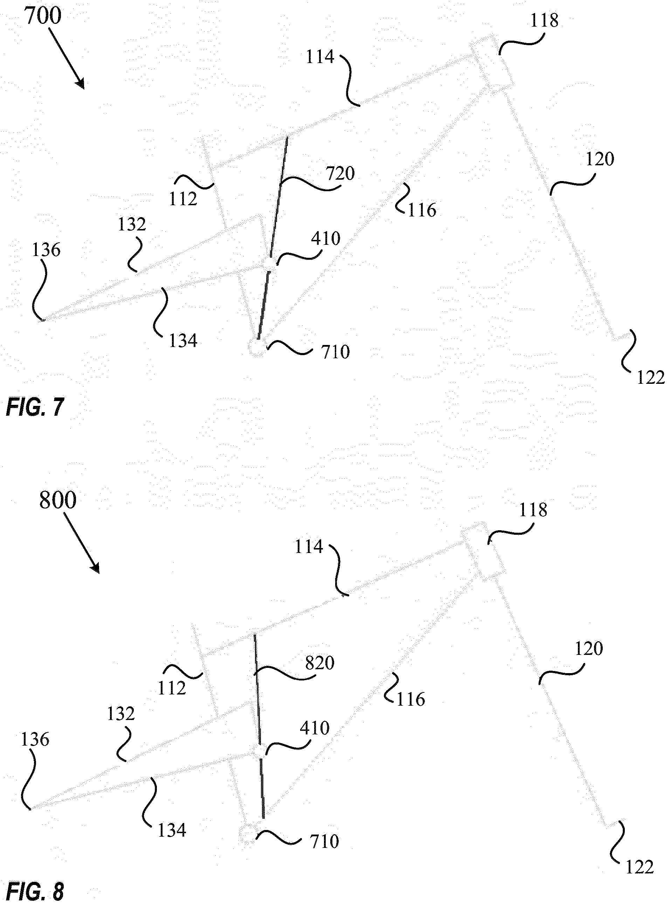

**FIGs. 7-15** illustrate simple line diagrams of example high pivot rear suspension bicycles (similar to the bicycles **400, 500)** having an additional support member (e.g., frame member, bracket, tube) added to the front triangle **110;** an existing frame member (e.g., seat tube, down tube) of the front triangle **110** modified; and/or an existing frame member (e.g., down tube) of the front triangle **110** replaced by additional support members (e.g., frame member, bracket, tube) added to the front triangle **110** to enable the fixed pivot point **410** to be located within the area **650.** Only the frame members of the bicycles are illustrated as the bicycles could be either multi-geared (chain driven) or internally geared (e.g., belt driven) such as those illustrated in **FIGs. 4** or **5****.** The same numbers will be used to identify the same parts and the parts previously discussed will not be discussed again. In previous figures, the crank axis **160** was illustrated as the intersection of the seat tube **112** and down tube **116** and the bottom bracket (for chain driven bicycles) or the gear box mounting bracket (for belt driven or internally geared bicycles) was not shown for ease of illustration. A mounting bracket **710** (bottom bracket or gear box bracket) is illustrated in these figures as it is utilized in some of the embodiments.

**FIGs. 7-11** illustrate various embodiments of an additional support member being provided to the front triangle **110** to enable the fixed pivot point **410** to be located within the area **650.**

**FIG. 7** illustrates a bicycle **700** having an additional support (frame) member **720** added to the front triangle **110** that extends from the mounting bracket **710** to the top tube **114.** The high pivot suspension point **410** is located on or near the support member **720.**

**FIG. 8** illustrates a bicycle **800** having an additional support (frame) member **820** extending from the down tube **116** to the top tube **114.** The high pivot suspension point **410** is located on or near the support member **820.**

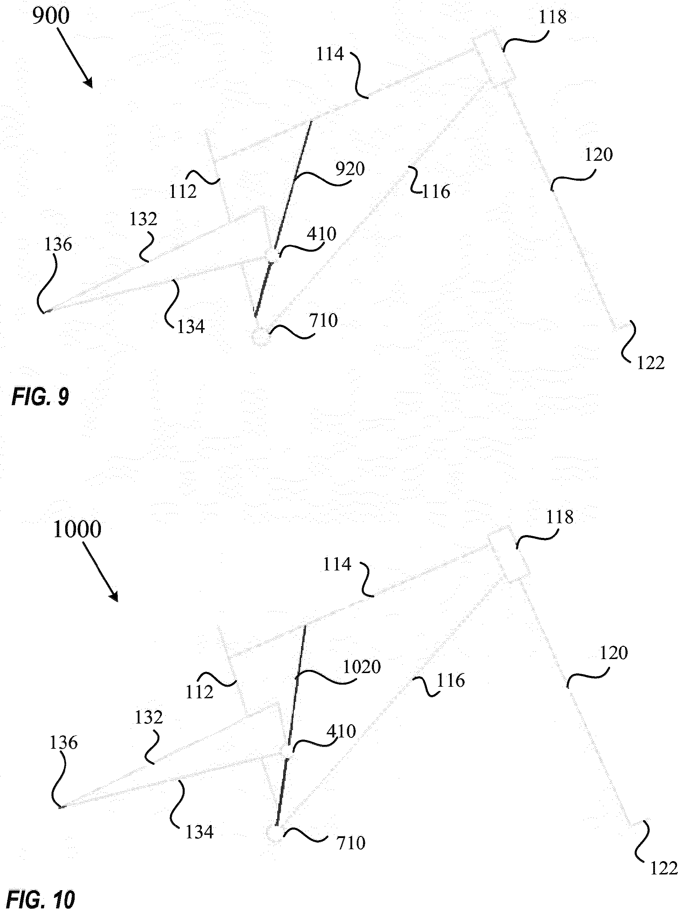

**FIG. 9** illustrates a bicycle **900** having an additional support (frame) member **920** extending from the seat tube **112** to the top tube **114.** The high pivot suspension point **410** is located on or near the support member **920.**

**FIG. 10** illustrates a bicycle **1000** having an additional support (frame) member **1020** extending from the mounting bracket **710** to the top tube **114** (like the bicycle **700** of **FIG. 7****).** However, in this embodiment the seat tube **112** connects to the support member **1020** instead of the mounting bracket **710.** The high pivot suspension point **410** is located on or near the support member **1020.**

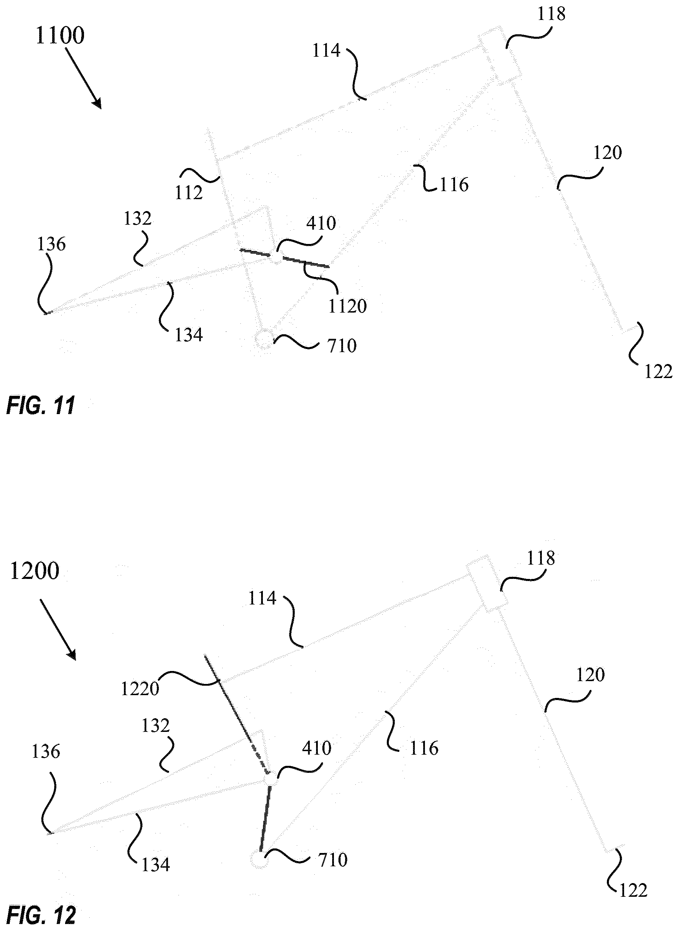

**FIG. 11** illustrates a bicycle **1100** having an additional support (frame) member **1120** extending from the down tube **116** to the seat tube **112.** The high pivot suspension point **410** is located on or near the support member **1120.**

The additional support members of **FIGs. 7-11** were illustrated as being frame members and/or tubes traversing between existing frame members (tubes) but are in no way intended to be limited thereto. Rather, the support members could be utilized in different configurations (e.g., number, location, orientation, shape, traversal path) without departing from the current scope. Furthermore, other typer of support members (e.g., brackets) that extend from a single frame member (e.g., seat tube, down tube) or between frame members could be utilized without departing from the current scope.

**FIGs. 12-13** illustrate various embodiments of frame members (tubes) of the front triangle **110** being modified to enable the fixed pivot point **410** to be located within the area **650.**

**FIG. 12** illustrates a bicycle **1200** where a traditional seat tube **112** is replaced with a curved seat tube **1220.** The seat tube **1220** extends downward from where a seat is typically located and then curves (or bends) backwards to the bottom bracket **710.** The high pivot suspension point **410** is located on or near the curved seat tube **1220.**

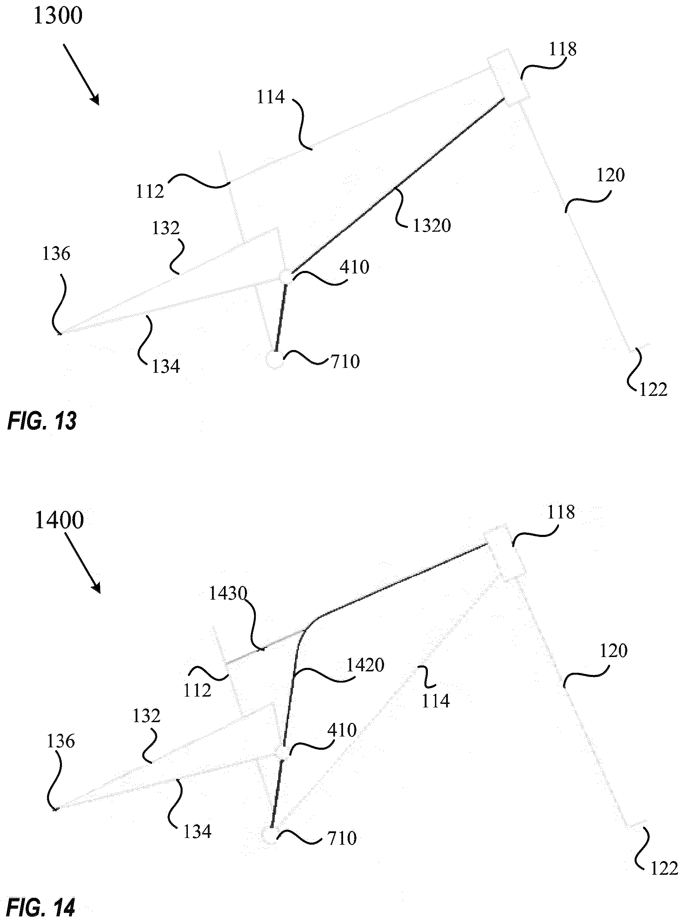

**FIG. 13** illustrates a bicycle **1300** where a traditional down tube **116** is replaced with a curved down tube **1320.** The down tube **1320** extends upward at a defined angle and then curves (or bends) forwards to the head tube **118.** The initial angle of the down tube **1320** is steep enough that the down tube **1320** would only intersect with the head tube **118** at a height higher than a standard bicycle without the curve at a mid-point. The high pivot suspension point **410** is located on or near the curved down tube **1320.**

The frame members modified are in no way intended to be limited to the embodiments illustrated in **FIGs. 12-13****.** Rather, other frame members or combinations of frame members could be modified and the type of modifications may vary without departing from the current scope.

**FIGs. 14-15** illustrate various embodiments of a frame member (e.g., top tube **114)** of the front triangle **110** being replaced by additional support (frame) members to enable the fixed pivot point **410** to be located within the area **650.**

**FIG. 14** illustrates a bicycle **1400** where a traditional top tube **114** is replaced with a curved first support (frame) member **1420** and a second support (frame) member **1430.** The curved first support member **1420** extends upwards from the mounting bracket **710** and then is curved at a mid-point towards the head tube **118** in similar fashion to the top tube **114.** The second support member **1430** extends from the seat tube **112** to the curved mid-point of the first support member **1420** (is basically a shorter version of a top tube **114).** As illustrated, the curved first support member **1420** extends upward from the mounting bracket **710** in similar fashion to the support member **1020** of **FIG. 10** so the seat tube **112** connects to the support member **1420** instead of the mounting bracket **710.** According to one embodiment, the first support member **1420** may extend from the mounting bracket **710** in similar fashion to the support member **720** of **FIG. 7** where the seat tube **112** connects to the mounting bracket **710.** The high pivot suspension point **410** is located on or near the curved first support member **1420.**

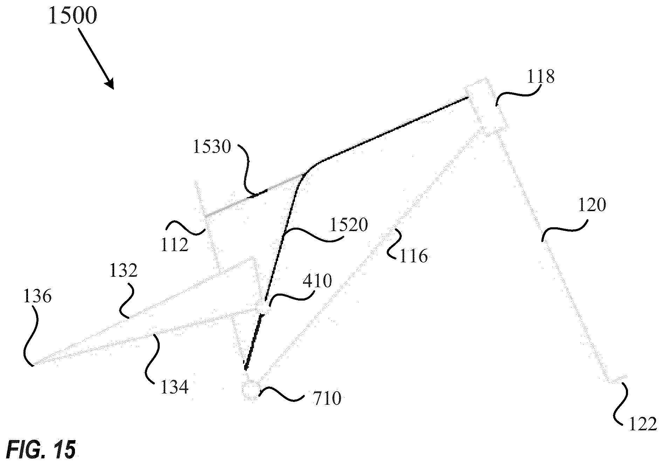

**FIG. 15** illustrates a bicycle **1500** where a traditional top tube **114** is replaced with a curved first support (frame) member **1520** and a second support (frame) member **1530.** The curved first support member **1520** extends from a lower portion of the seat tube **112** (in similar fashion to the frame member **920** of **FIG. 9****)** and then is curved at a mid-point towards the head tube **118** in similar fashion to the top tube **114.** The second support member **1530** (e.g., modified top tube **114)** extends from an upper portion of the seat tube **112** to the curved mid-point of the first support member **1520.** As illustrated, the curved first support member **1520** extends upward from the seat tube **112** in similar fashion to the support member **920** of **FIG. 9****.** The high pivot suspension point **410** is located on or near the curved first support member **1520.**

**FIGs. 14-15** illustrated the curved first support members **1420, 1520** extending from the mounting bracket **710** or the seat tube **112** but are not limited thereto. For example, a curved first support member may extend from the down tube **116** (in similar fashion to support member **820** of **FIG. 8****)** and then curve at a mid-point towards the head tube **118** without departing from the current scope. The frame member replaced and the additional support members added are in no way intended to be limited to the embodiments illustrated in **FIGs. 14-15****.** Rather, other frame members or combinations of frame members could be replaced, other additional support members or combinations of support members could be added, and/or frame members may be modified instead of being replaced without departing from the current scope.

Although the invention has been illustrated by reference to specific embodiments, it will be apparent that the invention is not limited thereto as various changes and modifications may be made thereto without departing from the scope. Reference to "one embodiment" or "an embodiment" means that a particular feature, structure or characteristic described therein is included in at least one embodiment. Thus, the appearances of the phrase "in one embodiment" or "in an embodiment" appearing in various places throughout the specification are not necessarily all referring to the same embodiment.

The various embodiments are intended to be protected broadly within the spirit and scope of the appended claims.

## Claims

1. A rear suspension bicycle comprising
a frame including a front triangle (110) and a swingarm (130);
a rear suspension pivot point (410) between the front triangle (110) and the swingarm (130), wherein the rear suspension pivot point (410) is located within an interior of the front triangle (110), wherein the location of the rear suspension pivot point (410) provides unique anti-rise values; and
a drive train providing movement from a crank axis where pedaling occurs to a rear wheel axis.

2. The rear suspension bicycle of claim 1, wherein
the rear suspension bicycle is a high pivot point rear suspension bicycle;
the front triangle (110) is formed between a seat, handlebars and the crank axis;
the rear suspension pivot point (410) provides a predominantly rearward axle path;
the drive train (150) includes a chain (152), a rear cassette (154) having a plurality of cogs (158) located at the rear wheel axis (136), an idler pulley located in close proximity to the rear suspension pivot point (410), a front chainring (156) located at the crank axis (160), and a derailleur (162) located in proximity to the rear cassette (154);
the chain (152) traverses from the rear cassette (154) to the idler pulley, from the idler pulley to the front chainring (156), from the front chainring (156) to the derailleur (162), and from the derailleur (162) back to the rear cassette (154); and
the derailleur (162) is to provide different driveline angles based on chain growth of the chain (152) caused by the cog (158) of the rear cassette (154) selected and vertical rear wheel travel of the bicycle.

3. The rear suspension bicycle of claims 1 or 2, wherein the front triangle (110) is formed by a seat tube (112), a top tube (114), and a down tube (116), wherein a mounting bracket (710) is located where the seat tube (112) and the down tube (116) meet and a head tube (118) is located where the top tube (114) and the down tube (116) meet, wherein an additional support member (720, 820, 920, 1020, 1120) is located within the interior of the front triangle (110), and wherein the rear suspension pivot point (410) is located on or near the additional support member (720, 820, 920, 1020, 1120).

4. The rear suspension bicycle of claim 3, wherein the additional support member (720, 820, 920, 1020, 1120) is a bracket extending from at least a subset of the seat tube (112) and the down tube (116).

5. The rear suspension bicycle of claim 3, wherein the additional support member (720, 820, 920, 1020, 1120) is a frame member connected to at least some subset of the seat tube (112), the top tube (114), the down tube (116) and the mounting bracket (710).

6. The rear suspension bicycle of claim 3, wherein the additional support member (720) extends from the mounting bracket (710) to the top tube (114).

7. The rear suspension bicycle of claim 3, wherein the additional support member (920) extends from the seat tube (112) to the top tube (114).

8. The rear suspension bicycle of claim 3, wherein the additional support member (820) extends from the down tube (116) to the top tube (114).

9. The rear suspension bicycle of claim 3, wherein the additional support member (1120) extends from the down tube (116) to the seat tube (112).

10. The rear suspension bicycle of claims 1 or 2, wherein the front triangle (110) includes a mounting bracket (710), a head tube (118), a seat tube (112), a down tube (116), a curved first support member (1420, 1520) extending upwards from a bottom of the bicycle and then curving at a mid-point toward the head tube (118), and a second support member (1430, 1530) extending from the seat tube (112) to the mid-point of the curved first frame member (1420, 1520), and wherein the rear suspension pivot point (410) is located on or near the curved first support member (1420, 1520).

11. The rear suspension bicycle of claim 10, wherein the curved first support member (1520) extends upwards from a portion of the seat tube (112) in close proximity to the mounting bracket (710).

12. The rear suspension bicycle of claim 10, wherein the curved first support member (1420) extends upwards from the mounting bracket (710).

13. The rear suspension bicycle of claims 1 or 2, wherein the front triangle (110) is formed by a seat tube (1220), a top tube (114), a down tube (116), a mounting bracket (710) located where the seat tube (1220) and the down tube (116) meet, and a head tube (118) located where the top tube (114) and the down tube (116) meet, wherein the seat tube (1220) extends downward and is then curved backwards toward the mounting bracket (710), wherein at least a portion of the curved seat tube (1220) is located within the interior of a typical front triangle (110), and wherein the rear suspension pivot point (410) is located on or near the curved seat tube (1220).

14. The rear suspension bicycle of claims 1 or 2, wherein the front triangle (110) is formed by a seat tube (112), a top tube (114), a down tube (1320), a mounting bracket (710) located where the seat tube (112) and the down tube (1320) meet, and a head tube (118) located where the top tube (114) and the down tube (1320) meet, wherein the down tube (1320) extends upward at an angle greater than required to intersect the head tube (118) and is then curved forwards toward the head tube (118), wherein at least a portion of the curved down tube (1320) is located within the interior of a typical front triangle (110), and wherein the rear suspension pivot point (410) is located on or near the curved down tube (1320).

15. The rear suspension bicycle of claims 1 or 2, wherein the rear suspension pivot point (410) is a fixed high pivot point.
